Europäisches Patentamt

(19) European Patent Office

Office européen des brevets

(11) Numéro de publication: **0 371 171**
**A1**

(12) **DEMANDE DE BREVET EUROPEEN**

(21) Numéro de dépôt: 88202732.9

(22) Date de dépôt: **30.11.88**

(51) Int. Cl.⁵: **B01D 45/06, B01D 50/00, B05B 15/12**

(43) Date de publication de la demande:
**06.06.90 Bulletin 90/23**

(84) Etats contractants désignés:
**BE DE FR IT**

(71) Demandeur: **Aermeccanica Biondi s.n.c.**
**Via Schiapparelli, 18**
**I-47100 Forli'(IT)**

(72) Inventeur: **Piazza, Claudio**
**Via Barone, 14**
**I-47100 Forli'(IT)**

(74) Mandataire: **Rinaldi, Carlo**
**c.o. Studio Brevetti Nazionali ed Esteri**
**dell'Ing. Carlo Rinaldi & C. s.d.f. Piazza di**
**Porta Castiglione, 16**
**I-40136 Bologna(IT)**

(54) Procédé et installation de filtrage des materielles de vernissage en surplus.

(57) Un procédé de filtrage des matériels de vernis-sage en surplus, consiste en ce que on crée un courant d'air avec vitesse controllée et constante dans la zone où se trouve l'objet à vernir, ce courant à une première direction de mouvement, un régime stationnaire et des même composants locaux du mouvement; on accélére intensément ce courant, pour apporter aux particules solides élevées énergie cinétique et quantité de mouvement vers une deuxième direction, qui est notement perpendiculaire à la première direction; le courant est sensiblement ralenti et détourné vers une troisième direction, note-ment opposée à la deuxième direction, de façon de séparer les particules à quantité de mouvement élevée des molécules des gaz et des vapeurs; on force les particules séparées de s'accumuler dans des zones facilement accessibles.

**FIG. 2**

## Procédé et installation de filtrage des matériels de vernissage en surplus

La présente invention a pour objet un procédé ayant le but de filtrer les matériels en surplus qui proviennent d'un processus de vernissage pour empêcher que ces matériels, qui sont essentiellement des pollutants, se dispersent dans l'air. L'invention concerne, de plus, une installation apte à réaliser ce procédé.

On sait que pendant un processus de vernissage au pistolet, une partie de vernis polverisée sur la surface d'un objet n'adhére pas à cette surface, mais elle reste dans l'air en forme de gaz, de vapeurs et de particules solides en suspension. Pour éliminer les restes de vernis pas utilisée qui ont des proprietés de polluer ou d'intoxiquer, on a proposé un procédé consistant à les diriger vers une cabine à filtrer, par laquelle ces restes sont totalement ou partialement eliminés.

• Les procedés connus ayant le but d'éliminer les matériels en surplus qui proviennent d'un processus de vernissage, consistent essentiellement à créer, dans la zone environnant l'object à vernir, un courant d'air ayant une vitesse et un sens du mouvement controllés, par lequelle on obtient une mélange d'air et de restes; le courant est en suite filtré par un ou plusieurs filtres, qui retiennent les particules en suspension et lassent passer les composants gazeuses de la mélange, qui sont, en suite, dirigés vers des substances qui les absorbent ou les dégradent chimiquement.

Une cabine à filtrer comprend notement une pièce, qui s'étend essentiellement dans le sens vertical et qui d'une partie supérieure est joindrée avec un aspirateur et d'une partie latérale présente une paroi, qui s'étend dans un sens à peu près vertical. Dans la partie supérieure de la cabine, et plus exactement dans la zone proche à la jonction avec l'aspirateur est disposé un filtre à paille pressée, qui retient les particules solides de la mélange. La paroi est pourvue d'un nombre fixé de fentes destinées à controller la vitesse et le sens du courant, qui, à l'intèrieur de la pièce, est à peu près vertical et au dehors de la paroi est essentiellement horizontal.

Le but principal de la cabine à filtrer est d'aspirer la mélange dans la direction definie par la paroi, empêchant à l'operateur de respirer de l'air polluée par les restes de la vernis.

Un autre but de cette cabine est de filtrer et d'abbattre chimiquement les pollutants contenus dans la mélange, pour empêcher que ces pollutants polluent l'ambiance. Actuellement l'operation d'abbattement n'est pas realisée dans la cabine, mais dans des déschargements ou dans des établissements aptes au but.

Le désavantage principal, qui ont les procédés connus, consiste essentiellement en ce que le courant, même s'il change direction et vitesse dans son parcours vers les filtres, se maintient dans des valeurs qui sont insuffisants à permettre la séparation d'une quantité prééminent de particules du courant ayant que ceci atteigne les filtres; c'est la raison pour laquelle les filtres sont au plus vite obturés par les particules et perdent leurs proprietées à filtrer.

En ce que concerne les installationes connues, le démontage et le remontage de la paroi c'est difficile.

La présente invention a pour but de remedier à ces inconvenients. L'invention, telle qu'elle est caracterisée dans la revendication indépendant, résout le problème consistant à créer un procédé de filtrage des matériels de vernissage en surplus. Un second problème que l'invention résout consiste à créer un'installation apte à effectuer ce procédé.

Par l'utilisation d'un procédé suivant l'invention, on atteint l'avantage qui provient de la séparation des particules solides du courant; ces particules s'accumulent dans une pièce prefixée et n'atteindrent pas les filtres de façon à prolonger la durée de ces filtres.

Par l'utilisation d'une installation suivant l'invention, on atteint principalement les suivants avantages:
- la paroi à fentes peut être facilment montée et démontée;
- les pollutants gazeuses sont éliminées dans la cabine même, qui est porvue au moins de deux filtres disposés en série; un premier filtre est consitué par un commun filtre à paille pressée, un deuxiéme filtre est constitué par une masse de charbon activé, apte à adsorbir les vapeurs des diluants de la vernis.

Le procédé suivant l'invention consiste essentiellement:
en ce qu'on crée un courant d'air avec une vitesse controllée et constante (par exemple 0.5 m.x sec.$^{-1}$) dans la zone ou se trouve l'objet à vernir, ce courant a une première direction de mouvement, un régime stationnaire et des composantes locaux du mouve ment identiques et parelleles entre eux;
en ce qu'on accélère ce courant jusqu'à valeurs d'environ 9-10 m.x sec.$^{-1}$, pour apporter aux particules solides, qui ont une masse très supérieure à la masse des molécules des gaz et des vapeurs contenues dans la mélange air-restes du vernissage, une élevée énergie cinétique et, en détournant en même temps le courant vers une deuxième direction de mouvement, qui est notement perpendiculaire à la première direction un'élevée quantité de mouvement vers la deuxième direction;

en ce qu'on relentit le courant jusqu'à valeurs d'environ 1.5-2 m.x sec.$^{-1}$, en le détournant en même temps vers une troisième direction de mouvement, notement opposée à la deuxième direction, de façon de séparer les particules à quantité de mouvement élevée des molécules des gaz et des vapeurs;

en ce qu'on force les particules séparées de s'accumuler dans des zones facilement accessibles.

Dans un préféré mode de réalisation du procédé, la première direction du mouvement est horizontal, la duexième direction est vertical vers le bas, la troisième direction est vertical vers l'haut.

Dans un autre mode de réalisation du procédé, le courant vertical est dirigé de façon qu'il passe parmi une série de filtres, comprendent au moins un filtre à paille pressée et au moins un filtre à charbon activé; où le filtre à paille pressée précéde le filtre à charbon activé dans le sens du courant.

Un exemple d'une installation apte à effectuer le procédé suivant l'invention est représenté par le dessin annexe, à titre d'exemple pas limitatif, dans lequel:

Figure 1 est une vue de front d'une installation apte à effectuer le procédé;

Figure 2 est une vue en section de l'installation représentée sur la Figure 1;

Figure 2a représente, à échelle agrandiée, un détail de Figure 2.

Figure 3 est un détail construttif de l'installation représentée sur les Figures 1, 2 et 2a;

Figures 4, 5, et 6 représentent comme le détail de la Fig.3 est démonté de l'installation.

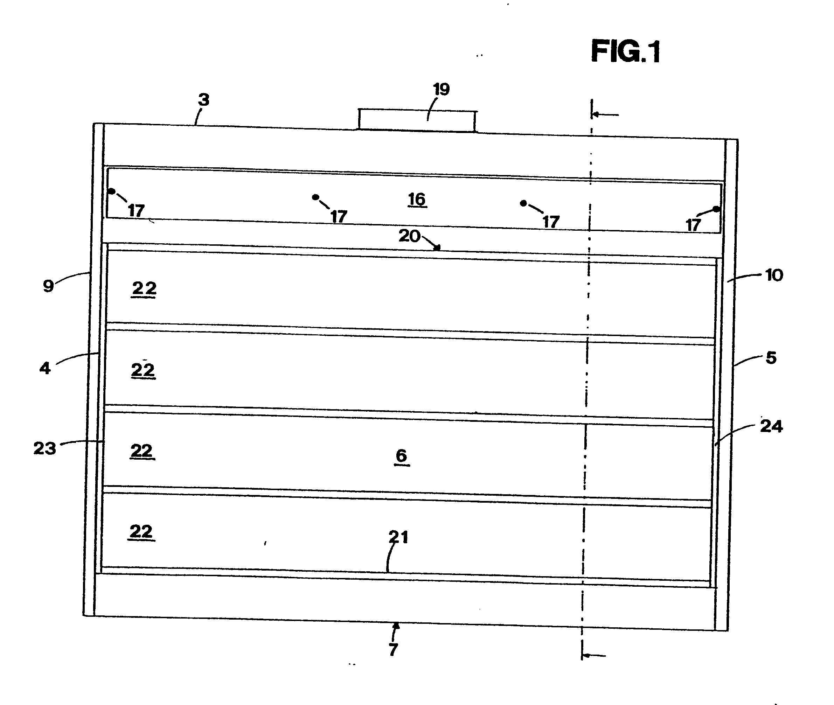

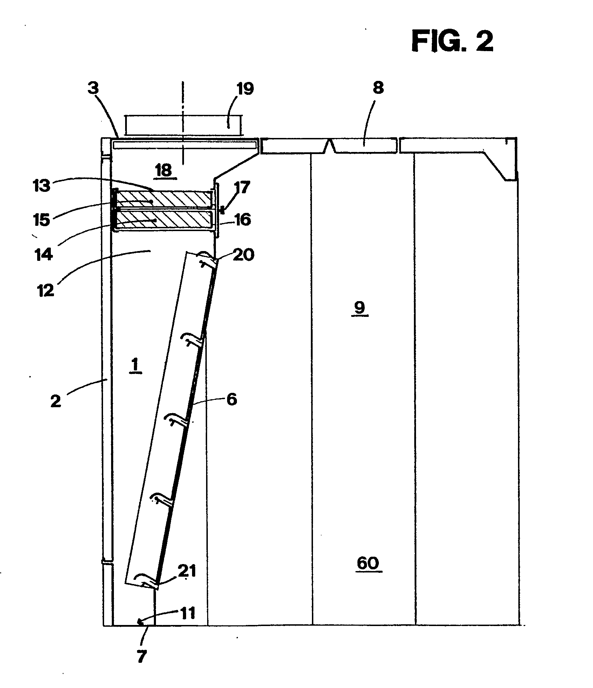

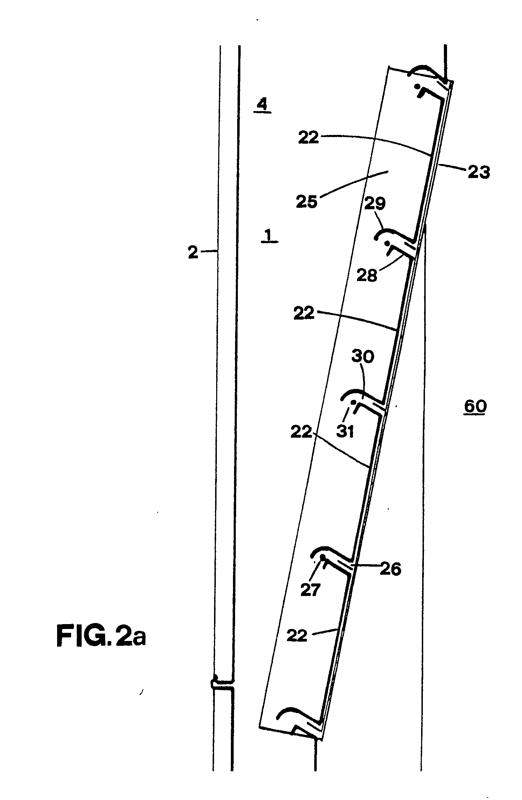

L'installation représentée sur les Figures 1, 2 et 2a est constituée par une cabine à filtrer, qui est appuyée sur le sol dans un lieu pas ventilé. La cabine comprende essentiellement une pièce 1, qui est délimitée par une paroi postérieure 2, une paroi supérieure 3, deux parois lateraux 4 et 5, une paroi frontale 6 et un sol 7. On a prévu, de plus, un appentis 8 et deux paroi 9 et 10, pour définir une galerie 60, qui s'étende au dehors de la paroi 6.

La pièce 1 est conformée comme un prisme avec deux bases rectangulaires; une première base coincide avec le sol 7 et une deuxième base 12 se trouve au-dessous d'un tiroir 13 pour filtres, qui est apte à être extrait; où la première base 11 est plus restreint que la deuxième base 12.

Le tiroir 13 est apte à longer deux filtres 14 et 15, disposés en série, dont le filtre 14 est constitué par de la paille pressée et le filtre 15 par du charbon activé et dont le filtre 14 précéde le filtre 15 dans le sens d'un courant. Le tiroir 13 est délimité à l'exterieur par une paroi 16, munie de poignées 17 pour sa manoe vre, par laquelle on obtient de remplacer les filtres épuisés. Le tiroir 13 est muni de structures connues et pas représentées, pour guider et soutenir les filtres 14 et 15.

Un espace 18 se trouve entre une partie au-dessous du tiroir 13 et la paroi supérieure 3. Cette dernière est munie d'un'ouverture, pas représentée, d'où a le début un raccord 19, auquel est engagé un tube, qui joindre l'espace 18 avec un aspirateur, apte à établir un courant d'air à l'intérieur et tout de suite avant la cabine. Le tube et l'aspirateur ne sont pas représentés, parce qu'ils sont connues.

Le paroi frontale 6 est inclinée par rapport à un plane vertical, en effect elle présente une limite supérieure 20, laquelle est plus sailliée que sa limité inferiéure 21. Cette inclinaison apporte à la pièce 1 sa configuration géométrique.

La paroi 6 est constituée par des structures profilées en tole flexible, disposées en série de l'haut vers le bas et soutenies en leur place par: deux listeaux latéraux 23 et 24, qui font part, respectivement, de deux structures de soutènement en L 25, solidaires aux parties internes des parois latéraux 4 et 5 (sur la Figure 2 on a représentée uniquement la structure 25 relative à la paroi 4, mais c'est sous-entendu que une identique structure est solidaire à la partie interne de la paroi 5); des consoles d'appui en V 26 et des tourillons de fixation 27, qui sont disposés au-dessus des consoles 26; où les consoles 26 et les tourillons 27 sont fixés aux structures de soutènement 25.

Chaque structure 22 présente une première extrémité 28 et une deu xième extrémité 29, recourbées et disposées, respectivement, aux extrémités supérieure et inférieure des structures 22 et qui s'étendrent à l'intérieur de la pièce 1 pour toute la longueur de la dimension majeure des structures 22.

Une partie 28 et une partie 29, qui appartient à deux structures 22 contigues, définissent une fente de passage 30 pour un courant d'air, qui dérive de la galerie 60 et qui se dirige vers la pièce 1; où la fente 30 se prolonge pour toute la longeur de la dimension majeure des structures 22 ou, plus en général, pour toute la largeur de la paroi 6. La paroi 6 présente cinq fentes 30, qui sont disposées en série de l'haut vers le bas. Le fentes 30 ont des sections transversaux très entroits pour accélérer le courant, qui les traverse et définit une lumière 31, tournée vers l'intérieur de la pièce 1, et plus exactement vers le bas pour tourner vers le bas le courant même.

Pendant le fonctionnement de l'installation, dans la galerie 60 s'établit un courant d'air mélangée avec des restes du processus de vernissage; ce courant a une vitesse constante de 0.5 m.x sec.$^{-1}$, une distribution uniforme de la vitesse même et plus exactament un mouvement stationnaire avec des écarts de la vitesse moyenne presque nuls, regard aussi bien à l'intensité que à la direction. A l'intérieure des fentes 30 la vitesse du courant augmente, par conséquence du principe de la continuité de la matière, jusqu'à des valeurs de 9-10 m.x sec⁻¹; cette accélération permette d'obtenir des particules qui ont élevée énergie cinétique et quantité de mouvement dans la direction vers le bas; le changement de la direction du courant permette d'utiliser le mieux l'inertie des particules avec élevée quantité de mouvement pour les séparer du courant d'air et des gaz, lequel à l'intérieur de la pièce 1 est tourné vers l'haut et a une vitesse moyenne d'environ 2 m.x sec⁻¹.

Lorsque les particules solides sont séparées du courant se déposent dans la base 11.

La forme décrite de la pièce 1 permette de maintenir la susdite vitesse moyenne, aussi bien si le débit du courant augmente dans le sens du mouvement par conséquence des contributions apportés des fentes 30.

Le courant, presque totalement purifié des particules solides, passe parmi les filtres 14 et 15. Le filtre 14 sert à rétenir des éventuelles particules solides pas precipitées précédemment; le filtre 15 sert à adsorbir les vapeurs et les gaz développés pendant le processus de vernissage.

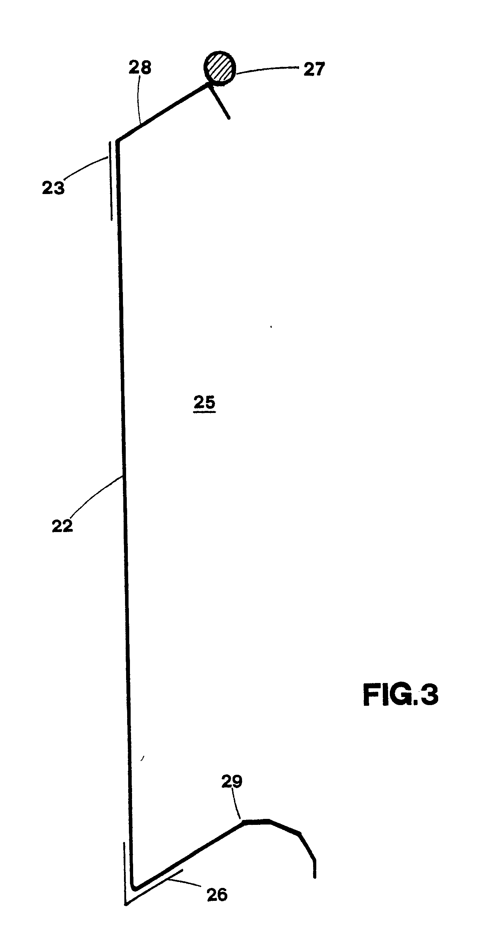

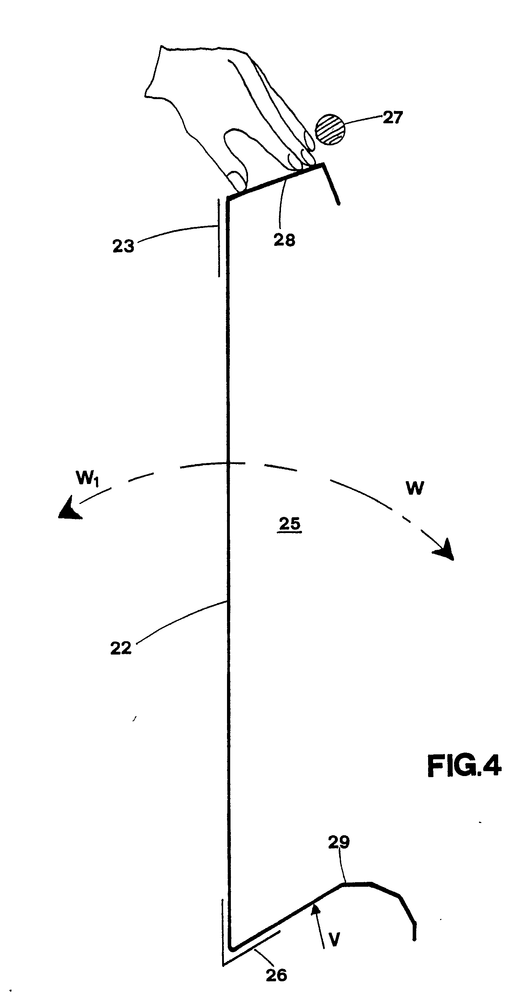

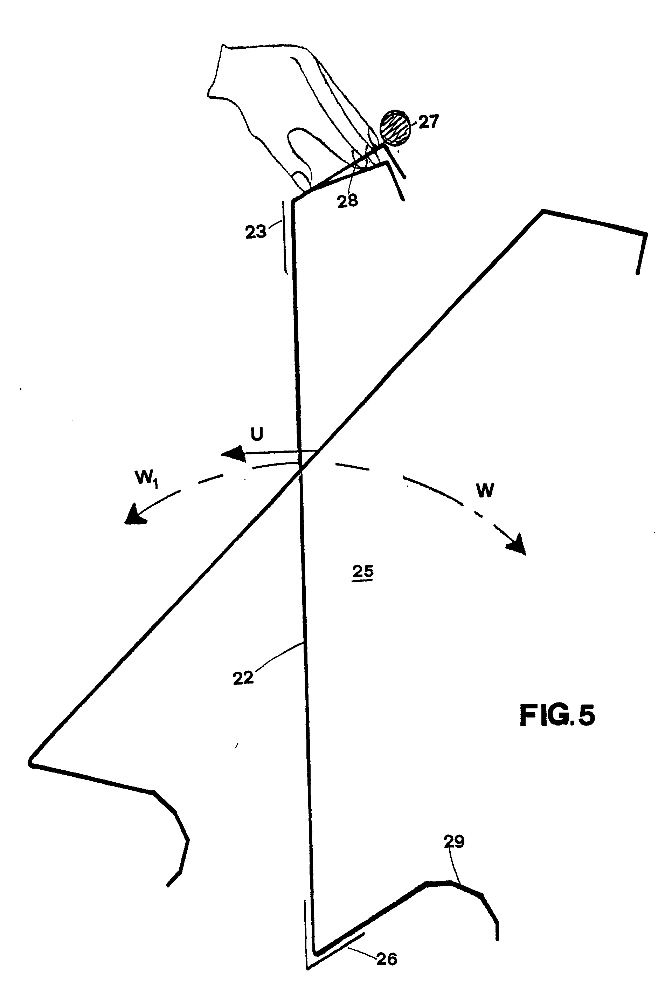

Figure 3 explique la disposition d'une structure 22 dans la pièce 1. Les extrémités de la structure 22 sont soutenies par des listaux latéraux 23 et 24, lesquels, sur la Figure 3 et sur les suivants Figures 4, 5 et 6, sont représentés schématiquement comme un segment, par des consoles d'appui en V 26 et fixés par des tourillons de fixation 27; où les consoles 26 et les tourillons 27 sont solidaires à la structure 25.

Sur les suivants Figures 4, 5 et 6 sont représentées trois phases de démontage de la structure 22, pour accéder à la pièce 1, dans le but d'emporter les particules, qui se sont accumulées à l'intérieur de la base 11. La partie 28 de la structure 22 est élastique et apte à éloigner par la main le tourillon 27; pour obtenir le dégagement de la partie 29 de la console 26, on presse la structure 22, en appliquant une force dans le sens de la flèche V sur une partie de la structure 22, qui est loin de la console 26. Par la suite on tourne la structure 22 dans le sens de la flèche W et on l'émporte en la tournant dans le sens de la flèche U.

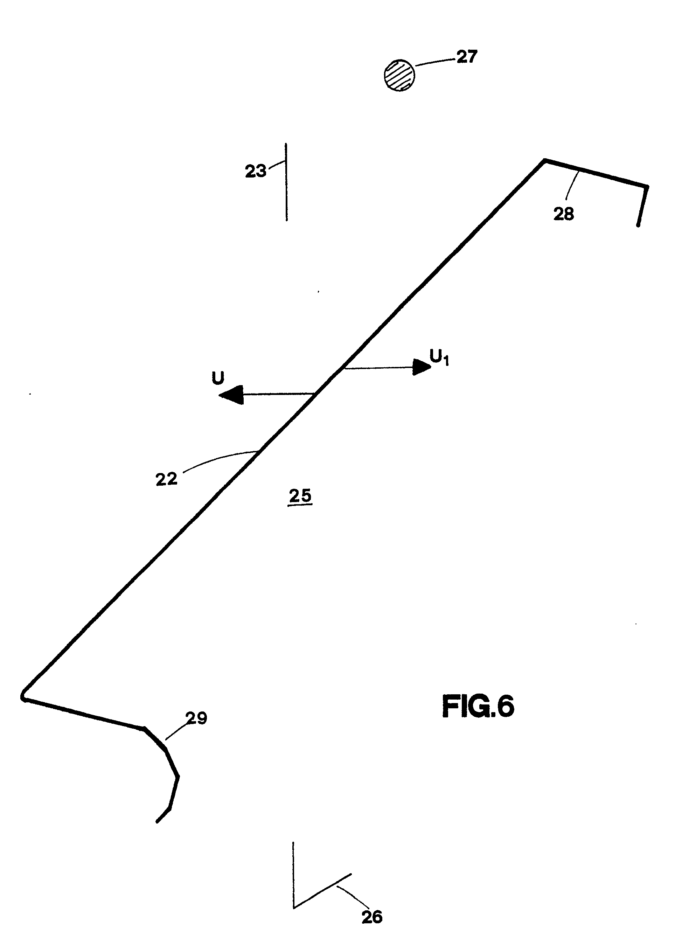

Pour effectuer le montage on introduit la structure 22, qui, au début, est disposée comme il est représenté sur la Figure 6, dans la pièce 1, en la poussant dans le sens de la flèche U₁, on la tourne dans le sens de la flèche W₁, jusqu'à ce que la structure 22 a été posée sur la console 26; si on continue la rotation dans le même sens, on obtient pour élasticité l'engagement de la partie 29 sur le tourillon 27.

## Revendications

1. Procédé de filtrage des matériels de vernissage en surplus, qui consiste: en ce qu'on crée un courant d'air vitesse controllée et constante dans la zone où se trouve l'objet à vernir, ce courant a une première direction de mouvement, un régime stationnaire et des composants locaux du mouvement identiques entre eux; caractérisé en ce qu'on accélére intensément ce courant, pour apporter àux particules solides élevées énergie cinétique et quantité de mouvement vers une deuxième direction, qui est notement perpendiculaire à la première direction; dans un façon connu le courant est sensiblement ralenti et détourné dans une troisième direction notement opposée à la deuxième direction, de façon de séparer les particules à quantité de mouvement élevé des molécules des gaz et des vapeurs; en ce qu'on force les particules séparées de s'accumuler dans des zones facilement accessibles.

2. Procédé selon la revendication 1, caracterisé en ce que la première direction est horizontal, la duexième direction est vertical vers le bas, la troisième direction est vertical vers l'haut.

3. Procédé selon la revendication 1, caracterisé en ce que le courant vertical est dirigé de façon qu'il passe parmi une série de filtres, qui comprendent au moins un filtre à paille pressée et au moins un filtre à charbon activé; où le filtre à paille pressée précéde le filtre à charbon activé dans le sens du courant.

4. Installation apte à effectuer le procédé, qui comprende au moins: une pièce (1), délimitée par des parois (2,3,4,5,6) et par un sol (7); la pièce (1) a une forme de prisme, avec une première base (11), laquelle coincide avec le sol (7) et avec une deuxième base (12), qui se trouve au-dessous d'un tiroir pour filtres (13) apte à être extrait; la première base (11) est plus restreinte que la deuxième base (12); la paroi supérieure (3) est munie d'un'ouverture, d'où a le début un raccord (19), auquel est engagé un tube, qui joindre un espace (18), disposé au-dessus du tiroir (13), avec un aspirateur, apte à établir un courant; un appentis (8) et deux parois extérieures (9,10), pour définir une galerie (60), qui s'etende au dehors de la paroi antérieure (6), dans laquelle s'établit un courant à faible vitesse et dans une première direction horizontal; la paroi (6), qui présente une limite supérieure (20), plus saillant que sa limite inférieure (21), est inclinée par rapport à un plane vertical, pour apoorter à la pièce (1) la forme de prisme; caractérisé en ce que la paroi (6) présente une pluralité de fentes (30), lesquelles ont des sections transversaux très étroits pour accélérer considérablement le courant, qui les transverse et definissent une lumière (31) tournée vers l'intérieur de la pièce (1) pour tourner le courant vers une deuxième direction perpendiculaire à la première direction; de façon connu, la pièce (1) est transversée d'un courant ayant une troisième direction opposée à la deuxième direction; le tiroir (13) est apte à loger deux filtres (14,15), disposés en série, dont le filtre (14) est constitué par de la paille pressée et la masse (14) par du charbon activé; le filtre (14) précéde le filtre (15) dans le sens du courant.

5. Installation selon la revendication 4 caracterisé en ce que les fentes (30) se prolongent pour toute la largeur de la paroi (6).

6. Installation selon la revendication 4 caracterisé en ce que les fentes (30) sont disposées en série de l'haut vers le bas dans la paroi (6).

7. Installation selon la revendication 4 caracterisé en ce que la paroi (6) est constituée par une pluralité de structures (22), lesquelles préséntent des premières extrémités (28) et des deuxièmes extrémités (29), recourbées; une première extrémité (28) coopére avec une deuxième extrémité (29) contigue pour définir une fente (30); des éléments de fixation sont prevus dans la partie intérieure des parois latéraux (4,5) pour monter et démonter les structures (22).

8. Installation selon les revendications 4 et 7 caracterisé en ce que l'extrémité (28) est apte à se déformer avec souplesse sous l'action de forces appliquées à la extrémité (28).

9. Installation selon les revendications 4 et 7 caracterisé en ce que les éléments de fixation sont soutenis par des structures en L, lesquelles comprendent des parties (25) aptes à être solidaires avec les parties intérieures des parois (4,5) et des listaux latéraux (23,24), qui soutient deux extrémités opposées de chaque structure (22).

10. Installation selon les revendications 4 et 7 caracterisé en ce que des consoles d'appui en V (26) et des tourillons de fixation (27), sont fixes aux structures de soutenement (25) pour monter et démonter les structures (22).

# FIG.1

EP 0 371 171 A1

# FIG. 2

EP 0 371 171 A1

FIG.2a

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 126 918 (METAL BOX)<br>* revendications 1,2,4; figure 1 *<br>--- | 1-4 | B 01 D  45/06<br>B 01 D  50/00<br>B 05 B  15/12 |
| A | EP-A-0 191 153 (ROTORCOMP VERDICHTER)<br>* figures 2,7,9,11-13 *<br>--- | 1-4,7 | |
| A | DE-A-2 832 865 (M. SCHMALHOFER)<br>* figures 1-4 *<br>--- | 1,3,4 | |
| A | DE-A-3 407 219 (CONDAIR)<br>* revendication 1; figures 1,4 *<br>--- | 1,4 | |
| A | GB-A-1 328 844 (AMERICAN AIR FILTER)<br>* revendication 1; figure 1 *<br>--- | 1,4 | |
| A | DE-A-2 737 386 (DOANE MANUFACTURING)<br>* figures 1-5 *<br>--- | 1,4,5,7,10 | |
| A | US-A-3 834 135 (A. JORDAN)<br>* figures 2-7 *<br>--- | 1,4,5,7,10 | |
| A | EP-A-0 135 200 (RMG-BEIERLING)<br>* revendication 1; figure 1 *<br>--- | 1,4 | DOMAINES TECHNIQUES RECHERCHES (Int. Cl.5)<br><br>B 01 D  45/06<br>B 01 D  45/08<br>B 01 D  45/16<br>B 01 D  50/00<br>B 05 B  15/12 |
| A | FR-A-2 344 318 (REGIE NATIONALE DES USINES RENAULT)<br>* revendication 1; figures 1-5,9-18 *<br>--- | 1,4 | |
| A | WO-A-8 603 994 (ELEKTROSTATISCHE SPRUEH- UND BESCHICHTUNGSANLAGEN G.F. VOEHRINGER)<br>* revendication 1; figures 9-12 *<br>----- | 1,4 | |

Le présent rapport a été établi pour toutes les revendications

| Lieu de la recherche | Date d'achèvement de la recherche | Examinateur |
|---|---|---|
| BERLIN | 05-07-1989 | KUEHN P |